# EUROPEAN PATENT APPLICATION

(11) **EP 4 796 366 A1**
(43) Date of publication of application: **26.08.2026**
(21) Application number: 24884551.3
(22) Date of filing: 24.10.2024
(51) Int. Cl.: B60L 7/10, B60L 15/20, B60T 8/00

(54) **CONTROL METHOD AND APPARATUS**

(30) Priority: 31.10.2023 CN 202311432583
(71) Applicant: HUAWEI TECHNOLOGIES CO., LTD., Shenzhen 518129 (CN)
(72) Inventor: DENG, Xiren, Shenzhen, Guangdong 518129 (CN); CHEN, Yongshang, Shenzhen, Guangdong 518129 (CN); XIN, Fulong, Shenzhen, Guangdong 518129 (CN); CAO, Xiangmin, Shenzhen, Guangdong 518129 (CN); WU, Wuming, Shenzhen, Guangdong 518129 (CN)
(74) Representative: Pfenning, Meinig & Partner mbB
(86) International application number: PCT/CN2024/126938
(87) International publication number: WO 2025/092547

(57) **Abstract**

A control method is provided, and includes: obtaining an electric regenerative braking torque of a front axle and an electric regenerative braking torque of a rear axle of a vehicle, where a ratio of the electric regenerative braking torque of the front axle to the electric regenerative braking torque of the rear axle is less than a preset distribution ratio; when hydraulic braking torque compensation is triggered, determining a hydraulic braking torque of the front axle based on the electric regenerative braking torque of the front axle and a braking torque determined based on the electric regenerative braking torque of the rear axle and the preset distribution ratio; and controlling, based on the hydraulic braking torque of the front axle, a hydraulic brake of the front axle to work. The control method is applied to an intelligent vehicle or a new energy vehicle, to help avoid premature triggering of an EBD function in a vehicle braking process. A control apparatus, a brake controller, a vehicle, a computer-readable storage medium, and a chip are also provided.

## Description

This application claims priority to Chinese Patent Application No. 202311432583.0, filed with the China National Intellectual Property Administration on October 31, 2023, and entitled "CONTROL METHOD AND APPARATUS", which is incorporated herein by reference in its entirety.

### TECHNICAL FIELD

This application relates to the field of intelligent driving, and more specifically, to a control method and apparatus.

### BACKGROUND

For an electric vehicle that performs energy regeneration through a rear axle, when a braking torque requested by an autonomous driving system or a human driver is greater than a maximum regenerative capability of a motor, an electronic stability controller (electronic stability controller, ESC) performs hydraulic compensation by utilizing a front axle and the rear axle as a whole. In this case, brake pressures of a master cylinder and four wheel cylinders are the same. In this way, a total braking torque on the rear axle may be excessive, causing premature generation of rear axle slipping, and premature triggering of an electronic brake force distribution (electronic brake force distribution, EBD) function.

### SUMMARY

This application provides a control method and apparatus, to help avoid premature triggering of an EBD function in a vehicle braking process.

According to a first aspect, a control method is provided. The method includes: obtaining a first electric regenerative braking torque of a first axle and a second electric regenerative braking torque of a second axle of a vehicle, where a ratio of the first electric regenerative braking torque to the second electric regenerative braking torque is less than a preset distribution ratio; when a first signal is obtained, determining a first hydraulic braking torque based on a first braking torque and the first electric regenerative braking torque, where the first braking torque is determined based on the preset distribution ratio and the second electric regenerative braking torque, and the first signal indicates to perform hydraulic braking torque compensation; and controlling, based on the first hydraulic braking torque, a hydraulic brake of the first axle to work.

For example, the first axle may be a front axle of the vehicle, and the second axle may be a rear axle of the vehicle; or the first axle may be a rear axle of the vehicle, and the second axle may be a front axle of the vehicle.

For example, the first axle is a front axle and the second axle is a rear axle. Based on the foregoing technical solution, when hydraulic braking torque compensation is performed on the vehicle, the front axle and the rear axle are not used as a whole, but current electric regenerative braking torques on the front axle and the rear axle are considered, to distribute a hydraulic braking torque to the front axle. In this way, premature generation of rear axle slipping caused by an excessive total braking torque on the rear axle can be avoided, and this helps avoid premature triggering of an EBD function in a vehicle braking process.

The preset distribution ratio may be an expected ratio of a braking torque of the first axle to a braking torque of the second axle.

In some possible implementations, the braking-required torque may be a braking-required torque output by an autonomous driving controller, or may be a braking-required torque determined based on a driving operation of a user.

In some possible implementations, that the first braking torque is determined based on the preset distribution ratio and the second electric regenerative braking torque includes: The first braking torque is a product of the preset distribution ratio and the second electric regenerative braking torque.

With reference to the first aspect, in some implementations of the first aspect, the determining the first hydraulic braking torque based on the first braking torque and the first electric regenerative braking torque includes: when a sum of the first braking torque and the second electric regenerative braking torque is greater than a braking-required torque, determining the first hydraulic braking torque based on the braking-required torque, the first electric regenerative braking torque, and the second electric regenerative braking torque. In this case, a hydraulic brake of the second axle may not output a hydraulic braking torque.

Based on the foregoing technical solution, if the sum of the second electric regenerative braking torque and the first braking torque is greater than the braking-required torque, the first hydraulic braking torque may be determined based on the braking-required torque, the first electric regenerative braking torque, and the second electric regenerative braking torque. In this way, premature triggering of the EBD function in the vehicle braking process can be avoided, and it can be ensured that a total braking torque of the vehicle follows the braking-required torque.

In some possible implementations, when the sum of the first braking torque and the second electric regenerative braking torque is greater than the braking-required torque, the first hydraulic braking torque is equal to a difference between the braking-required torque and a sum of the first electric regenerative braking torque and the second electric regenerative braking torque.

In some possible implementations, the determining the first hydraulic braking torque based on the first braking torque and the first electric regenerative braking torque includes: when the sum of the first braking torque and the second electric regenerative braking torque is equal to the braking-required torque, determining a difference between the first braking torque and the first electric regenerative braking torque as the first hydraulic braking torque.

With reference to the first aspect, in some implementations of the first aspect, the determining the first hydraulic braking torque based on the first braking torque and the first electric regenerative braking torque includes: when a sum of the first braking torque and the second electric regenerative braking torque is less than a braking-required torque, determining a second hydraulic braking torque based on the braking-required torque, the second electric regenerative braking torque, and the first braking torque; determining a third hydraulic braking torque and a fourth hydraulic braking torque based on the preset distribution ratio and the second hydraulic braking torque; and determining the first hydraulic braking torque based on the third hydraulic braking torque and a fifth hydraulic braking torque, where the fifth hydraulic braking torque is determined based on a difference between the first braking torque and the first electric regenerative braking torque; and the controlling, based on the first hydraulic braking torque, the hydraulic brake of the first axle to work includes: controlling the hydraulic brake of the first axle to output the first hydraulic braking torque, and controlling a hydraulic brake of the second axle to output the fourth hydraulic braking torque.

Based on the foregoing technical solution, when the sum of the first braking torque and the second electric regenerative braking torque is less than the braking-required torque, a remaining braking torque may be distributed based on the preset distribution ratio, the hydraulic brake of the first axle is controlled to output a sum of the third hydraulic braking torque and the fifth hydraulic braking torque, and the hydraulic controller of the second axle is controlled to output the fourth hydraulic braking torque. In this way, when the hydraulic braking torque is distributed, the front axle and the rear axle are not used as a whole, but current electric regenerative braking torques on the front axle and the rear axle are considered, to distribute the hydraulic braking torque to the front axle and the rear axle. This helps avoid premature generation of rear axle slipping caused by an excessive total braking torque on the rear axle, to avoid premature triggering of the EBD function in the vehicle braking process. In addition, it can be ensured that the total braking torque of the vehicle follows the braking-required torque in the braking process.

In some possible implementations, the third hydraulic braking torque is a hydraulic braking torque distributed to the first axle based on the preset distribution ratio and the second hydraulic braking torque, and the fourth hydraulic braking torque is a hydraulic braking torque distributed to the second axle based on the preset distribution ratio and the second hydraulic braking torque.

With reference to the first aspect, in some implementations of the first aspect, the method further includes: obtaining a sixth hydraulic braking torque of the second axle when an EBD function is triggered; and controlling the hydraulic brake of the first axle to output a seventh hydraulic braking torque, and stopping increasing a hydraulic braking torque output by the hydraulic brake of the second axle, where the seventh hydraulic braking torque is determined based on the third hydraulic braking torque, the fifth hydraulic braking torque, and a difference between the fourth hydraulic braking torque and the sixth hydraulic braking torque.

Obtaining the sixth hydraulic braking torque of the second axle when the EBD function is triggered may also be understood as triggering enabling of the EBD function when the hydraulic braking torque of the second axle reaches the sixth hydraulic braking torque.

For example, the first axle is a front axle and the second axle is a rear axle. Based on the foregoing technical solution, when the EBD function is triggered, an under-shot braking torque on the rear axle may be compensated for the front axle. In this way, a problem that the total braking torque is under-shot due to triggering of the EBD can be avoided, and this helps avoid a safety risk caused by a decrease in a deceleration of the vehicle.

In some possible implementations, the seventh hydraulic braking torque is a sum of the third hydraulic braking torque, the fifth hydraulic braking torque, and the difference between the fourth hydraulic braking torque and the sixth hydraulic braking torque.

With reference to the first aspect, in some implementations of the first aspect, the first signal indicates that the vehicle reaches a maximum electric regenerative braking torque.

Based on the foregoing technical solution, for example, for a vehicle that performs regenerative braking through the rear axle, when the regenerative braking torque of the rear axle reaches a maximum regenerative braking torque of the rear axle, hydraulic braking torque compensation may be triggered, so that the total braking torque of the vehicle follows the braking-required torque.

With reference to the first aspect, in some implementations of the first aspect, the first electric regenerative braking torque is an actual regenerative torque of the first axle, and the second electric regenerative braking torque is an actual regenerative torque of the second axle.

Based on the foregoing technical solution, hydraulic compensation may be performed based on actual regenerative torques of the front axle and the rear axle. In this way, when a requested regenerative braking torque is greater than an actual regenerative torque, it can be ensured that the total braking torque of the vehicle follows the braking-required torque, to avoid a safety risk caused by under-shooting of the braking torque of the vehicle in the braking process.

With reference to the first aspect, in some implementations of the first aspect, the method includes: sending first electric regenerative braking request information to a vehicle control unit (vehicle control unit, VCU) based on the braking-required torque, where the first electric regenerative braking request information includes information about a third electric regenerative braking torque; and when a difference between the third electric regenerative braking torque and an actual regenerative torque of the vehicle is greater than or equal to a first preset difference, sending second electric regenerative braking request information to the VCU based on the difference and the braking-required torque, where the second electric regenerative braking request information includes information about a fourth electric regenerative braking torque, and the actual regenerative torque of the vehicle is a sum of the actual regenerative torque of the first axle and the actual regenerative torque of the second axle.

Based on the foregoing technical solution, an ESC may first send the first electric regenerative braking request to the VCU. When the difference between the third electric regenerative braking torque and the actual regenerative torque is greater than or equal to the first preset difference, the requested electric braking torque may be dynamically adjusted. In this way, when there is a large deviation between the actual regenerative torque of the motor and the third electric regenerative braking torque, the requested electric regenerative braking torque may be correspondingly compensated, to ensure that the total braking torque of the vehicle can follow the braking-required torque, so as to avoid a safety risk caused by under-shooting of the braking torque of the vehicle in the braking process.

In some possible implementations, when obtaining the electric regenerative braking request information, the VCU may distribute a requested front axle torque of a front axle motor control unit and distribute a requested rear axle torque of a rear axle motor control unit based on the information about the electric regenerative braking torque included in the electric regenerative braking request information.

With reference to the first aspect, in some implementations of the first aspect, the method further includes: obtaining the first signal when a difference between the fourth electric regenerative braking torque and the maximum electric regenerative braking torque of the vehicle is less than or equal to a second preset difference, and a difference between the fourth electric regenerative braking torque and the actual regenerative torque of the vehicle is greater than or equal to the first preset difference.

Based on the foregoing technical solution, when the difference between the fourth electric regenerative braking torque and the maximum electric regenerative braking torque of the vehicle is less than or equal to the second preset difference, and the difference between the fourth electric regenerative braking torque and a requested actual regenerative torque of the vehicle is greater than or equal to the first preset difference, hydraulic braking torque compensation may be triggered, so that the total braking torque of the vehicle follows the braking-required torque.

In some possible implementations, that the difference between the fourth electric regenerative braking torque and the maximum electric regenerative braking torque of the vehicle is less than or equal to the second preset difference includes: The fourth electric regenerative braking torque reaches the maximum electric regenerative braking torque of the vehicle.

With reference to the first aspect, in some implementations of the first aspect, before obtaining the first signal, the method further includes: obtaining information that is about the maximum electric regenerative braking torque and that is sent by the VCU.

According to a second aspect, a control method is provided. The method includes: obtaining a braking-required torque; sending first electric regenerative braking request information to a vehicle control unit VCU based on the braking-required torque, where the first electric regenerative braking request information includes information about a third electric regenerative braking torque; and when a difference between the third electric regenerative braking torque and an actual regenerative torque of a vehicle is greater than or equal to a first preset difference, sending second electric regenerative braking request information to the VCU based on the difference and the braking-required torque, where the second electric regenerative braking request information includes information about a fourth electric regenerative braking torque.

Based on the foregoing technical solutions, an actual regenerative torque of a motor is considered during energy regeneration. When an absolute value of a deviation between a requested torque and an actual regenerative torque is greater than a control dead zone, the requested electric regenerative braking torque is dynamically adjusted. In this way, when the actual electric regenerative braking torque is insufficient, the requested electric regenerative braking torque is increased. This helps avoid a safety risk caused by an insufficient electric regenerative braking torque.

In some possible implementations, when the third electric regenerative braking torque is greater than the actual regenerative torque of the vehicle, the fourth electric regenerative braking torque is greater than the third electric regenerative braking torque; or when the third electric regenerative braking torque is less than the actual regenerative torque of the vehicle, the fourth electric regenerative braking torque is less than the third electric regenerative braking torque.

With reference to the second aspect, in some implementations of the second aspect, the method further includes: performing hydraulic braking torque compensation when a difference between the fourth electric regenerative braking torque and a maximum regenerative torque of the vehicle is less than or equal to a second preset difference, and a difference between the fourth electric regenerative braking torque and the actual regenerative torque of the vehicle is greater than or equal to the first preset difference.

With reference to the second aspect, in some implementations of the second aspect, before performing hydraulic braking torque compensation, the method further includes: obtaining information that is about the maximum regenerative torque and that is sent by the VCU.

According to a third aspect, a control apparatus is provided. The control apparatus includes: an obtaining unit, configured to obtain a first electric regenerative braking torque of a first axle and a second electric regenerative braking torque of a second axle of a vehicle, where a ratio of the first electric regenerative braking torque to the second electric regenerative braking torque is less than a preset distribution ratio; a determining unit, configured to: when a first signal is obtained, determine a first hydraulic braking torque based on a first braking torque and the first electric regenerative braking torque, where the first braking torque is determined based on the preset distribution ratio and the second electric regenerative braking torque, and the first signal indicates to perform hydraulic braking torque compensation; and a control unit, configured to control, based on the first hydraulic braking torque, a hydraulic brake of the first axle to work.

With reference to the third aspect, in some implementations of the third aspect, the determining unit is configured to: when a sum of the first braking torque and the second electric regenerative braking torque is greater than a braking-required torque, determine the first hydraulic braking torque based on the braking-required torque, the first electric regenerative braking torque, and the second electric regenerative braking torque.

With reference to the third aspect, in some implementations of the third aspect, the determining unit is configured to: when a sum of the first braking torque and the second electric regenerative braking torque is less than a braking-required torque, determine a second hydraulic braking torque based on the braking-required torque, the second electric regenerative braking torque, and the first braking torque; determine a third hydraulic braking torque and a fourth hydraulic braking torque based on the preset distribution ratio and the second hydraulic braking torque; and determine the first hydraulic braking torque based on the third hydraulic braking torque and a fifth hydraulic braking torque, where the fifth hydraulic braking torque is determined based on a difference between the first braking torque and the first electric regenerative braking torque; and the control unit is configured to: control the hydraulic brake of the first axle to output the first hydraulic braking torque, and control a hydraulic brake of the second axle to output the fourth hydraulic braking torque.

With reference to the third aspect, in some implementations of the third aspect, the obtaining unit is further configured to obtain a sixth hydraulic braking torque of the second axle when an electronic brake force distribution EBD function is triggered; and the control unit is further configured to: control the hydraulic brake of the first axle to output a seventh hydraulic braking torque, and stop increasing a hydraulic braking torque output by the hydraulic brake of the second axle, where the seventh hydraulic braking torque is determined based on the third hydraulic braking torque, the fifth hydraulic braking torque, and a difference between the fourth hydraulic braking torque and the sixth hydraulic braking torque.

With reference to the third aspect, in some implementations of the third aspect, the first signal indicates that the vehicle reaches a maximum electric regenerative braking torque.

With reference to the third aspect, in some implementations of the third aspect, the first electric regenerative braking torque is an actual regenerative torque of the first axle, and the second electric regenerative braking torque is an actual regenerative torque of the second axle.

With reference to the third aspect, in some implementations of the third aspect, the apparatus further includes: a sending unit, configured to send first electric regenerative braking request information to a vehicle control unit VCU based on the braking-required torque, where the first electric regenerative braking request information includes information about a third electric regenerative braking torque, where the sending unit is further configured to: when a difference between the third electric regenerative braking torque and an actual regenerative torque of the vehicle is greater than or equal to a first preset difference, send second electric regenerative braking request information to the VCU based on the difference and the braking-required torque, where the second electric regenerative braking request information includes information about a fourth electric regenerative braking torque, and the actual regenerative torque of the vehicle is a sum of the actual regenerative torque of the first axle and the actual regenerative torque of the second axle.

With reference to the third aspect, in some implementations of the third aspect, the obtaining unit is configured to obtain the first signal when a difference between the fourth electric regenerative braking torque and the maximum electric regenerative braking torque of the vehicle is less than or equal to a second preset difference, and a difference between the fourth electric regenerative braking torque and the actual regenerative torque of the vehicle is greater than or equal to the first preset difference.

With reference to the third aspect, in some implementations of the third aspect, the obtaining unit is further configured to: before obtaining the first signal, obtain information that is about the maximum electric regenerative braking torque and that is sent by the VCU.

According to a fourth aspect, a control apparatus is provided. The control apparatus includes: an obtaining unit, configured to obtain a braking-required torque; and a sending unit, configured to send first electric regenerative braking request information to a vehicle control unit VCU based on the braking-required torque, where the first electric regenerative braking request information includes information about a third electric regenerative braking torque, where the sending unit is further configured to: when a difference between the third electric regenerative braking torque and an actual regenerative torque of a vehicle is greater than or equal to a first preset difference, send second electric regenerative braking request information to the VCU based on the difference and the braking-required torque, where the second electric regenerative braking request information includes information about a fourth electric regenerative braking torque.

With reference to the fourth aspect, in some implementations of the fourth aspect, the apparatus further includes a determining unit, configured to determine to perform hydraulic braking torque compensation when a difference between the fourth electric regenerative braking torque and a maximum regenerative torque of the vehicle is less than or equal to a second preset difference, and the difference between the fourth electric regenerative braking torque and the actual regenerative torque of the vehicle is greater than or equal to the first preset difference.

With reference to the fourth aspect, in some implementations of the fourth aspect, the obtaining unit is further configured to: before the determining unit determines to perform hydraulic braking torque compensation, obtain information that is about the maximum regenerative torque and that is sent by the VCU.

According to a fifth aspect, a control apparatus is provided. The apparatus includes a processing unit and a storage unit. The storage unit is configured to store instructions, and the processing unit executes the instructions stored in the storage unit, so that the apparatus performs any possible method according to the first aspect or the second aspect.

According to a sixth aspect, a brake controller is provided. The brake controller includes any possible control apparatus according to the third aspect, or includes the control apparatus according to the fourth aspect, or includes the control apparatus according to the fifth aspect.

According to a seventh aspect, this application provides a vehicle. The vehicle includes any possible control apparatus according to the third aspect, or includes the control apparatus according to the fourth aspect, or includes the control apparatus according to the fifth aspect, or includes the brake controller according to the sixth aspect.

According to an eighth aspect, this application provides a computer program product. The computer program product includes computer program code, and when the computer program code is run on a computer, the computer is enabled to perform any possible method according to the first aspect or the second aspect.

It should be noted that all or some of the computer program code may be stored in a first storage medium. The first storage medium may be packaged together with a processor, or may be packaged separately from a processor. This is not specifically limited in embodiments of this application.

According to a ninth aspect, this application provides a computer-readable medium. The computer-readable medium stores program code, and when the computer program code is run on a computer, the computer is enabled to perform any possible method according to the first aspect or the second aspect.

According to a tenth aspect, this application provides a chip. The chip includes a circuit, and the circuit is configured to perform any possible method according to the first aspect or the second aspect.

According to an eleventh aspect, a control method is provided. The method may be applied to a vehicle that performs braking energy regeneration through a rear axle. The method includes: obtaining an electric regenerative braking torque of the rear axle of the vehicle; when a first signal is obtained, determining a hydraulic braking torque of a front axle based on a relationship between a braking-required torque and a sum of a first braking torque and the electric regenerative braking torque of the rear axle, where the first braking torque is determined based on a preset distribution ratio and the electric regenerative braking torque of the rear axle, and the first signal indicates to perform hydraulic braking torque compensation; and controlling, based on the hydraulic braking torque of the front axle, a hydraulic brake of the front axle to work.

Based on the foregoing technical solution, when performing hydraulic braking torque compensation, the vehicle that performs regenerative braking through the rear axle may be combined with a current electric regenerative braking torque of the rear axle. In this way, premature generation of rear axle slipping caused by an excessive total braking torque on the rear axle can be avoided, and this helps avoid premature triggering of an EBD function in a vehicle braking process.

In some possible implementations, that the first braking torque is determined based on the preset distribution ratio and the electric regenerative braking torque of the rear axle includes: The first braking torque is a product of the preset distribution ratio and the electric regenerative braking torque of the rear axle.

With reference to the eleventh aspect, in some implementations of the eleventh aspect, the determining the hydraulic braking torque of the front axle based on the relationship between the braking-required torque and the sum of the first braking torque and the electric regenerative braking torque of the rear axle includes: when the sum of the first braking torque and the electric regenerative braking torque of the rear axle is greater than the braking-required torque, determining the hydraulic braking torque of the front axle based on the braking-required torque and the electric regenerative braking torque of the rear axle.

In some possible implementations, when the sum of the first braking torque and the electric regenerative braking torque of the rear axle is greater than the braking-required torque, the hydraulic braking torque of the front axle is equal to a difference between the braking-required torque and the electric regenerative braking torque of the rear axle. In this case, a hydraulic brake of the rear axle may not output the hydraulic braking torque.

With reference to the eleventh aspect, in some implementations of the eleventh aspect, the determining the hydraulic braking torque of the front axle based on the relationship between the braking-required torque and the sum of the first braking torque and the electric regenerative braking torque of the rear axle includes: when the sum of the first braking torque and the electric regenerative braking torque of the rear axle is equal to the braking-required torque, determining the first braking torque as the hydraulic braking torque of the front axle.

With reference to the eleventh aspect, in some implementations of the eleventh aspect, the determining the hydraulic braking torque of the front axle based on the relationship between the braking-required torque and the sum of the first braking torque and the electric regenerative braking torque of the rear axle includes: when the sum of the first braking torque and the electric regenerative braking torque of the rear axle is less than the braking-required torque, determining a second hydraulic braking torque based on the braking-required torque, the electric regenerative braking torque of the rear axle, and the first braking torque; determining a third hydraulic braking torque and a fourth hydraulic braking torque based on the preset distribution ratio and the second hydraulic braking torque; and determining the hydraulic braking torque of the front axle based on the third hydraulic braking torque and the first braking torque; and the controlling, based on the hydraulic braking torque of the front axle, the hydraulic brake of the front axle to work includes: controlling the hydraulic brake of the front axle to output the hydraulic braking torque of the front axle and controlling the hydraulic brake of the rear axle to output the fourth hydraulic braking torque.

With reference to the eleventh aspect, in some implementations of the eleventh aspect, the obtaining the sixth hydraulic braking torque of the rear axle when the EBD function is triggered includes: controlling the hydraulic brake of the front axle to output a seventh hydraulic braking torque, and stopping increasing a hydraulic braking torque output by the hydraulic brake of the rear axle, where the seventh hydraulic braking torque is determined based on the third hydraulic braking torque, the first braking torque, and a difference between the fourth hydraulic braking torque and the sixth hydraulic braking torque.

Based on the foregoing technical solution, when the EBD function is triggered, hydraulic braking force compensation may be performed on the front axle based on an under-shot hydraulic braking force on the rear axle. In this way, a problem that the total braking torque is under-shot due to triggering of the EBD can be avoided, and this helps avoid a safety risk caused by a decrease in a deceleration of the vehicle.

### BRIEF DESCRIPTION OF DRAWINGS

FIG. 1 is a functional block diagram of a vehicle according to an embodiment of this application;
FIG. 2 is a block diagram of a system architecture according to an embodiment of this application;
FIG. 3 is a schematic flowchart of a control method according to an embodiment of this application;
FIG. 4A and FIG. 4B are another schematic flowchart of a control method according to an embodiment of this application;
FIG. 5 is another schematic flowchart of a control method according to an embodiment of this application;
FIG. 6 is another schematic flowchart of a control method according to an embodiment of this application;
FIG. 7 is a block diagram of a control apparatus according to an embodiment of this application; and
FIG. 8 is another block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation. In addition, in the descriptions of embodiments, unless otherwise specified, "a plurality of" means two or more.

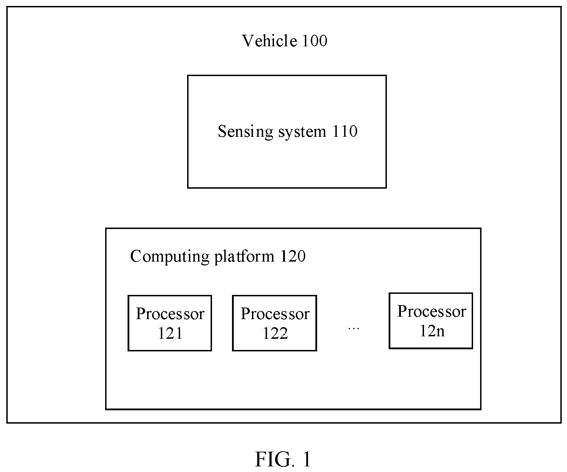

FIG. 1 is a functional block diagram of a vehicle 100 according to an embodiment of this application. The vehicle 100 may include a sensing system 110 and a computing platform 120. The sensing system 110 may include one or more sensors that sense information about an ambient environment of the vehicle 100. For example, the sensing system 110 may include a positioning system. The positioning system may be a global positioning system (global positioning system, GPS), a BeiDou system, or another positioning system. The sensing system 110 may further include one or more of the following: an inertial measurement unit (inertial measurement unit, IMU), a lidar, a millimeter-wave radar, an ultrasonic radar, and an image shooting apparatus.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

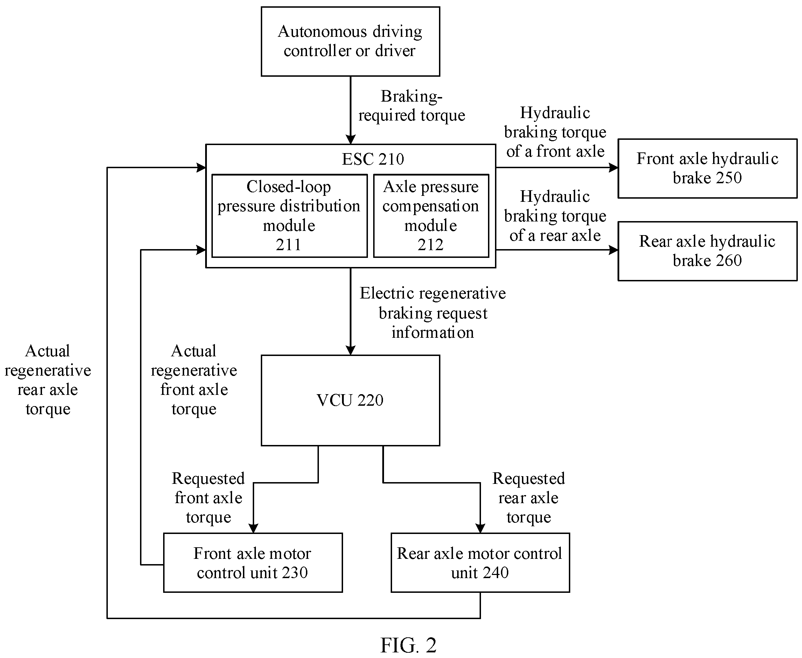

FIG. 2 is a block diagram of a system architecture 200 according to an embodiment of this application. The system architecture 200 may include an ESC 210, a VCU 220, a front axle motor control unit 230, a rear axle motor control unit 240, a front axle hydraulic brake 250, and a rear axle hydraulic brake 260. The ESC 210 includes a closed-loop pressure distribution module 211 and an axle pressure compensation module 212. The ESC 210 may obtain a braking-required torque based on an instruction output by an autonomous driving controller or a driving operation of a driver. The ESC 210 may send electric regenerative braking request information to the VCU 220 based on the braking-required torque, where the electric regenerative braking request information includes information about a requested electric regenerative braking torque. The VCU 220 may determine a requested front axle torque of the front axle motor control unit and a requested rear axle torque of the rear axle motor control unit based on the requested electric regenerative braking torque. The closed-loop pressure distribution module 211 may obtain an actual regenerative front axle torque and an actual regenerative rear axle torque from the front axle motor control unit 230 and the rear axle motor control unit 240 respectively, so that the ESC 210 may determine, based on a difference between an actual motor regenerative torque and the requested electric regenerative braking torque sent by the ESC 210 to the VCU 220, whether to adjust the requested electric regenerative braking torque sent to the VCU 220. The axle pressure compensation module 212 may be configured to: when it is determined that hydraulic compensation needs to be performed, calculate, based on current electric regenerative braking torques on a front axle and a rear axle, hydraulic braking torques output by the front axle hydraulic brake 250 and the rear axle hydraulic brake 260.

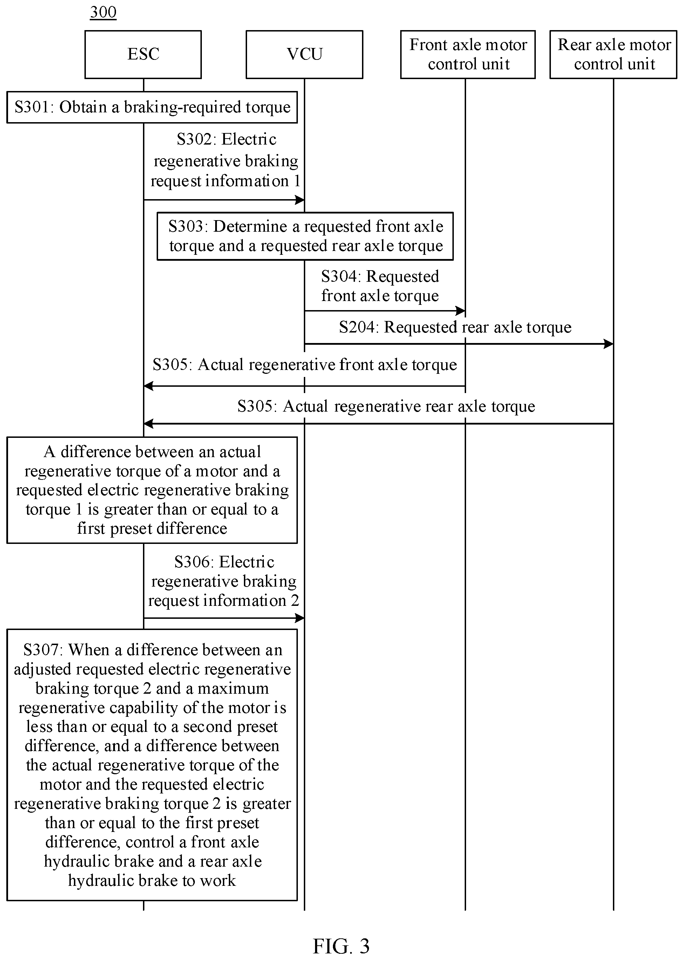

FIG. 3 is a schematic flowchart of a control method 300 according to an embodiment of this application. The method 300 includes the following steps.

S301: An ESC obtains a braking-required torque.

Optionally, that the ESC obtains the braking-required torque includes: The ESC obtains the braking-required torque based on an instruction output by an autonomous driving controller.

Optionally, that the ESC obtains the braking-required torque includes: The ESC obtains the braking-required torque based on a driving operation of a driver.

S302: The ESC sends electric regenerative braking request information 1 to a VCU based on the braking-required torque, where the electric regenerative braking request information 1 includes information about a requested electric regenerative braking torque 1.

For example, for a vehicle that performs energy regeneration through a rear axle, a maximum regenerative torque of the rear axle may be 1800 Nm. If the braking-required torque is 1000 Nm, the ESC may send the electric regenerative braking request information 1 to the VCU, where the electric regenerative braking request information 1 includes information indicating that the requested electric regenerative braking torque 1 is 1000 Nm.

S303: The VCU determines a requested front axle torque of a front axle motor control unit and a requested rear axle torque of a rear axle motor control unit based on the requested electric regenerative braking torque 1.

For example, for the vehicle that performs energy regeneration through the rear axle, if the electric regenerative braking request information 1 includes the information indicating that the requested electric regenerative braking torque 1 is 1000 Nm, the VCU may determine that the requested front axle torque is 0 and the requested rear axle torque is 1000 Nm.

The foregoing uses the vehicle that performs energy regeneration through the rear axle as an example. Embodiments of this application are not limited thereto. For example, for a vehicle that performs energy regeneration through dual motors on a front axle and a rear axle, after obtaining a requested electric regenerative braking torque, the VCU may determine a requested front axle torque and a requested rear axle torque.

S304: The VCU sends information about the requested front axle torque and information about the requested rear axle torque to the front axle motor control unit and the rear axle motor control unit respectively.

S305: The ESC separately obtains an actual regenerative front axle torque and an actual regenerative rear axle torque that are sent by the front axle motor control unit and the rear axle motor control unit.

For example, for the vehicle that performs energy regeneration through the rear axle, the requested rear axle torque may be 1000 Nm, and the ESC may obtain the actual regenerative rear axle torque, that is 900 Nm, sent by the rear axle motor control unit.

S306: When a difference between an actual regenerative torque of a motor and the requested electric regenerative braking torque 1 is greater than or equal to a first preset difference, the ESC sends electric regenerative braking request information 2 to the VCU based on the difference and the braking-required torque, where the electric regenerative braking request information 2 includes information about a requested electric regenerative braking torque 2.

The actual regenerative torque of the motor may be a sum of the actual regenerative front axle torque and the actual regenerative rear axle torque.

For example, the first preset difference is 30 Nm.

For example, for the vehicle that performs energy regeneration through the rear axle, if the requested rear axle torque may be 1000 Nm and the actual regenerative rear axle torque obtained by the ESC is 900 Nm, the ESC may determine that the electric braking torque output by the rear axle motor control unit is under-shot, and there is a difference of 100 Nm between the actual regenerative torque and the requested electric regenerative braking torque. The ESC may send the electric regenerative braking request information 2 to the VCU. The electric regenerative braking request information 2 includes information indicating that the requested electric regenerative braking torque 2 is 1100 Nm.

Optionally, when the actual regenerative torque is less than the requested electric regenerative braking torque 1, the requested regenerative braking torque 2 is equal to a sum of the braking-required torque and the difference, or the regenerative braking torque 2 is equal to a product of a preset multiple (for example, 0.9 times or 1.1 times) and a sum of the braking-required torque and the difference, or the regenerative braking torque 2 is equal to a sum of the braking-required torque, the difference, and a preset torque (for example, 50 Nm).

Optionally, the requested regenerative braking torque 2 may be determined through proportional integral (proportional integral, PI) control.

When receiving the electric regenerative braking request information 2, the VCU may re-determine the requested front axle torque and the requested rear axle torque based on the requested electric regenerative braking torque 2.

S307: When a difference between the adjusted requested electric regenerative braking torque 2 and a maximum regenerative capability of the motor is less than or equal to a second preset difference, and a difference between the actual regenerative torque of the motor and the requested electric regenerative braking torque 2 is greater than or equal to the first preset difference, control a front axle hydraulic brake and a rear axle hydraulic brake to work.

For example, for the vehicle that performs energy regeneration through the rear axle, a maximum regenerative torque of the rear axle may be 1800 Nm. If the adjusted requested electric regenerative braking torque 2 can reach 1800 Nm, and the difference between the actual regenerative torque (for example, 1600 Nm) of the motor and the requested electric regenerative braking torque 2 is still greater than the first preset difference, the ESC may control, through hydraulic compensation, the front axle hydraulic brake and the rear axle hydraulic brake to work, to ensure that a total braking torque of the front axle and the rear axle can follow the braking-required torque.

For example, the braking-required torque is 2000 Nm. When the requested electric regenerative braking torque 2 reaches 1800 Nm and the actual regenerative torque of the motor is 1600 Nm, the ESC may distribute a hydraulic braking torque of the front axle and a hydraulic braking torque of the rear axle based on a preset distribution ratio (for example, a ratio of the front axle braking torque to the rear axle braking torque is 3:2) and a remaining braking torque (400 Nm, that is, a difference between the braking-required torque and the actual regenerative torque of the motor). For example, a hydraulic braking torque of 240 Nm is distributed to the front axle hydraulic brake, and a hydraulic braking torque of 160 Nm is distributed to the rear axle hydraulic brake, to ensure that the total braking torque of the front axle and the rear axle is 2000 Nm.

For example, the braking-required torque is 5000 Nm. When the requested electric regenerative braking torque 2 reaches 1800 Nm and the actual regenerative torque of the motor is 1600 Nm, the ESC may distribute a hydraulic braking torque of the front axle and a hydraulic braking torque of the rear axle based on a preset distribution ratio (for example, a ratio of the hydraulic braking torque of the front axle to the hydraulic braking torque of the rear axle is 3:2) and a remaining braking torque (3400 Nm, that is, a difference between the braking-required torque and the actual regenerative torque of the motor). For example, a hydraulic braking torque of 2040 Nm is distributed to the front axle hydraulic brake, and a hydraulic braking torque of 1360 Nm is distributed to the rear axle hydraulic brake, to ensure that the total braking torque of the front axle and the rear axle is 5000 Nm. However, when a total braking torque of the rear axle reaches a specific torque value (for example, 2000 Nm), an EBD function may be triggered. After the EBD function is triggered, the braking torque of the rear axle may not increase any further, resulting in a total braking torque of 4040 Nm (a total braking torque of the front axle is 2040 Nm, and the total braking torque of the rear axle is 2000 Nm) of the front axle and the rear axle, and overall under-shooting of 960 Nm. To avoid under-shooting of the total braking torque of the vehicle, the ESC may compensate for the under-shot braking torque through the front axle hydraulic brake. For example, the under-shooting of 960 Nm is compensated for the front axle. In this way, the total braking torque of the front axle becomes 3000 Nm, so that the total braking torque can be ensured to be 5000 Nm. This avoids a safety risk caused by a large decrease in a braking force of the vehicle.

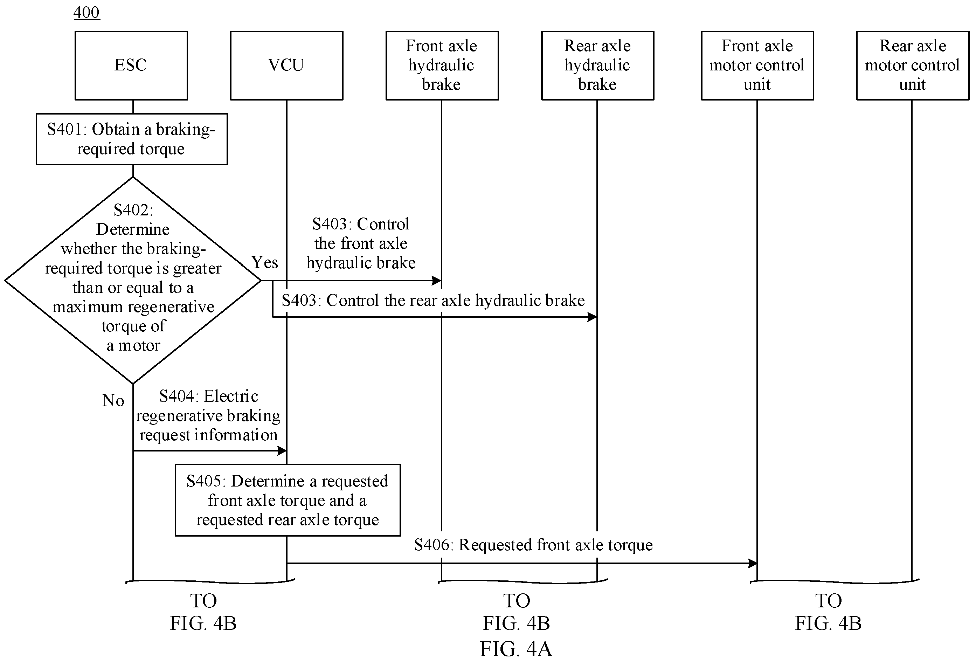

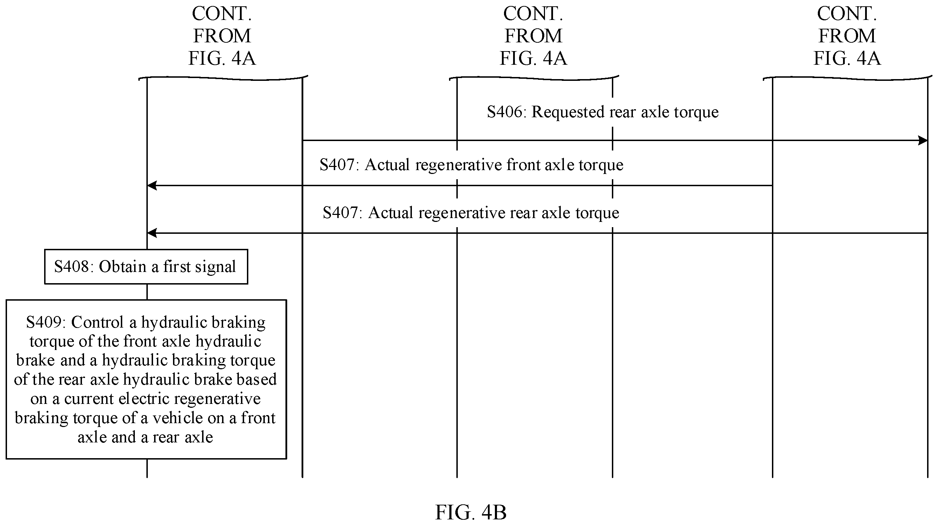

FIG. 4A and FIG. 4B are a schematic flowchart of a control method 400 according to an embodiment of this application. The method 400 includes the following steps.

S401: An ESC obtains a braking-required torque.

For S401, refer to the descriptions of S301.

S402: The ESC determines whether the braking-required torque is greater than or equal to a maximum regenerative torque of a motor.

If the braking-required torque is greater than or equal to the maximum regenerative torque of the motor, S403 is performed; otherwise, S404 is performed.

S403: The ESC controls, based on the braking-required torque and a preset distribution ratio, a front axle hydraulic brake and a rear axle hydraulic brake to work.

For example, the maximum regenerative torque of the motor is 2000 Nm, and the braking-required torque is 5000 Nm. The ESC may control, based on the braking-required torque and the preset distribution ratio, the front axle hydraulic brake to output a hydraulic braking torque of 3000 Nm, and control the rear axle hydraulic brake to output a hydraulic braking torque of 2000 Nm.

S404: The ESC sends electric regenerative braking request information to a VCU based on the braking-required torque, where the electric regenerative braking request information includes information about a requested electric regenerative braking torque.

For example, the maximum regenerative torque of the motor is 2000 Nm, and the braking-required torque is 1000 Nm. The ESC sends the electric regenerative braking request information to the VCU, where the electric regenerative braking request information includes information indicating that the requested electric regenerative braking torque is 1000 Nm.

S405: The VCU determines a requested front axle torque of a front axle motor control unit and a requested rear axle torque of a rear axle motor control unit based on the requested electric regenerative braking torque.

S406: The VCU sends information about the requested front axle torque and information about the requested rear axle torque to the front axle motor control unit and the rear axle motor control unit respectively.

For example, for a vehicle that performs energy regeneration through a rear axle, if the requested electric regenerative braking torque is 1000 Nm, the VCU may determine that the requested rear axle torque is 1000 Nm.

For S405 and S406, refer to the descriptions of S303 and S304. Details are not described herein again.

S407: The ESC separately obtains an actual regenerative front axle torque and an actual regenerative rear axle torque that are sent by the front axle motor control unit and the rear axle motor control unit.

For S407, refer to the descriptions of S305. Details are not described herein again. In the descriptions of the method 400, an example in which an actual regenerative torque of the motor is the same as the requested electric regenerative braking torque is used for description.

S408: The ESC obtains a first signal, where the first signal indicates to perform hydraulic braking torque compensation.

For example, the vehicle that performs regenerative braking through the rear axle is used as an example, and the first signal indicates that the rear axle reaches a maximum electric regenerative braking torque.

S409: Control the hydraulic braking torque of the front axle hydraulic brake and the hydraulic braking torque of the rear axle hydraulic brake based on a current electric regenerative braking torque of the vehicle on a front axle and the rear axle.

Optionally, the controlling the hydraulic braking torque of the front axle hydraulic brake and the hydraulic braking torque of the rear axle hydraulic brake based on the electric regenerative braking torque of the vehicle includes: determining a hydraulic braking torque 1 based on the electric regenerative braking torque of the vehicle; and controlling, based on the braking-required torque and the hydraulic braking torque 1, the front axle hydraulic brake to output a hydraulic braking torque 2 and the rear axle hydraulic brake to output a hydraulic braking torque 3.

For example, for the vehicle that performs energy regeneration through the rear axle, when the actual regenerative rear axle torque is 1000 Nm, a requested actual regenerative torque may be converted into the hydraulic braking torque 1 at a ratio of 1:1.

Optionally, the determining the hydraulic braking torque 2 of the front axle hydraulic brake and the hydraulic braking torque 3 of the rear axle hydraulic brake based on the braking-required torque and the hydraulic braking torque 1 includes: determining the hydraulic braking torque 2 of the front axle hydraulic brake and the hydraulic braking torque 3 of the rear axle hydraulic brake based on the braking-required torque, the preset distribution ratio, and the hydraulic braking torque 1.

For example, for the vehicle that performs energy regeneration through the rear axle, a maximum regenerative torque of the rear axle is 1800 Nm, and the braking-required torque is 5000 Nm. When an electric regenerative braking torque of the rear axle reaches 1800 Nm, the ESC may start hydraulic braking compensation. It is assumed that hydraulic braking torques output by the front axle hydraulic brake and the rear axle hydraulic brake are still distributed based on the preset distribution ratio (for example, a ratio of a front axle braking torque to a rear axle braking torque is 3:2), that is, the front axle hydraulic brake outputs a hydraulic braking torque of 1980 Nm, and the rear axle hydraulic brake outputs a hydraulic braking torque of 1280 Nm. When a total braking torque of the rear axle reaches 2000 Nm (that is, an actual hydraulic braking torque of the rear axle is 200 Nm), an EBD function may be triggered, and the total braking torque of the rear axle may not increase any further. In this way, even if the front axle hydraulic brake outputs the hydraulic braking torque of 1980 Nm, a total braking torque of the front axle and the rear axle is only 3980 Nm, causing under-shooting of 1080 Nm. After the EBD is triggered, the front axle may no longer compensate for an under-shot braking torque additionally, causing severe under-shooting of the total braking torque, a large braking insufficiency risk, and an increased vehicle safety risk.

In this embodiment of this application, to ensure that the total braking torque of the front axle and the rear axle follows the braking-required torque, hydraulic braking forces may not be distributed to the front axle hydraulic brake and the rear axle hydraulic brake according to the preset distribution ratio. After the total braking torque of the rear axle reaches 2000 Nm and the EBD function is triggered, the under-shooting of 960 Nm may be compensated for the front axle. In other words, the front axle hydraulic brake outputs a hydraulic braking torque of 3000 Nm, to ensure that the total braking torque of the front axle and the rear axle reaches 5000 Nm. In this way, it can be ensured that after the EBD function is triggered, the front axle can compensate for the under-shot braking torque additionally, to avoid under-shooting of the total braking torque. This helps reduce a safety risk caused by braking torque insufficiency.

For example, for the vehicle that performs energy regeneration through the rear axle, the maximum regenerative torque of the rear axle is 1000 Nm, the braking-required torque is 2000 Nm, and the EBD function is triggered when the total braking torque (a sum of the electric braking torque and the hydraulic braking torque) of the rear axle reaches 2000 Nm. When the electric regenerative braking torque of the rear axle reaches 1000 Nm, the ESC may start hydraulic braking compensation. The ESC may distribute, according to the preset distribution ratio (for example, 3:2), the hydraulic braking torques output by the front axle hydraulic brake and the rear axle hydraulic brake. In other words, the front axle hydraulic brake outputs 600 Nm, and the rear axle hydraulic brake outputs 400 Nm. In this way, a total braking torque of the front axle is 600 Nm, and the total braking torque of the rear axle is 1400 Nm. A ratio of the total braking torque of the front axle to the total braking torque of the rear axle is 3:7.

Alternatively, for the vehicle that performs energy regeneration through the rear axle, the maximum regenerative torque of the rear axle is 1000 Nm, the braking-required torque is 2000 Nm, and the EBD function is triggered when the total braking torque (a sum of the electric regenerative braking torque and the hydraulic braking torque) of the rear axle reaches 2000 Nm. When the electric regenerative braking torque of the rear axle reaches 1000 Nm, the ESC may start hydraulic braking compensation. The ESC may first convert the electric regenerative braking torque of the rear axle into an equivalent hydraulic braking torque. For example, the converted hydraulic braking torque is 1000 Nm. Because a ratio of the electric regenerative braking torque of the front axle to the electric regenerative braking torque of the rear axle is less than 3:2, the ESC may determine, based on the preset distribution ratio (for example, 3:2) and the electric regenerative braking torque of the rear axle, that a first braking torque is 1500 Nm. Because a sum of the first braking torque and the total braking torque of the rear axle is greater than the braking-required torque, the ESC may determine that the hydraulic braking torque of the front axle is a difference between the braking-required torque and the total braking torque of the rear axle, that is, 1000 Nm. In this way, the total braking torque of the front axle is 1000 Nm, and the total braking torque of the rear axle is 1000 Nm. The ratio of the total braking torque of the front axle to the total braking torque of the rear axle is 1:1. This ratio is closer to the preset distribution ratio than the foregoing 3:7, and helps improve vehicle safety.

The maximum regenerative torque of the rear axle may be determined based on a status of the vehicle. For example, when a speed of the vehicle is greater than or equal to 20 kph and a state of charge (state of charge, SOC) of a battery is less than or equal to 95%, the maximum regenerative torque of the rear axle may be 1800 Nm. When the speed of the vehicle is less than 20 kph or the SOC is greater than 95%, the maximum regenerative torque of the rear axle may be 1000 Nm.

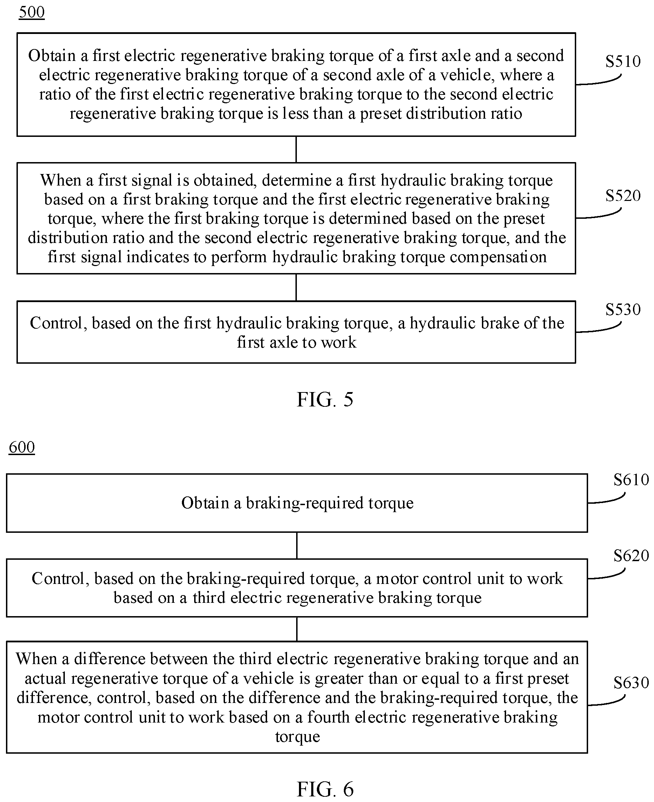

FIG. 5 is a schematic flowchart of a control method 500 according to an embodiment of this application. The method 500 may be performed by the vehicle 100, or may be performed by the computing platform 120, or may be performed by a processor, a circuit, or a chip in the computing platform 120, or may be performed by the ESC 210, or may be performed by the axle pressure compensation module 212 in the ESC 210. The method 500 includes the following steps.

S510: Obtain a first electric regenerative braking torque of a first axle and a second electric regenerative braking torque of a second axle of a vehicle, where a ratio of the first electric regenerative braking torque to the second electric regenerative braking torque is less than a preset distribution ratio.

For example, the first axle may be a front axle of the vehicle, and the second axle may be a rear axle of the vehicle; or the first axle may be a rear axle of the vehicle, and the second axle may be a front axle of the vehicle.

For example, the preset distribution ratio is 3:2. For a vehicle that performs regenerative braking through the rear axle, the first electric regenerative braking torque may be 0, and the second electric regenerative braking torque may be 1000 Nm. The ratio of the first electric regenerative braking torque to the second electric regenerative braking torque is less than 3:2.

For another example, the preset distribution ratio is 3:2. For a vehicle that performs regenerative braking through the front axle and the rear axle, the first electric regenerative braking torque may be 1000 Nm, and the second electric regenerative braking torque may be 1000 Nm. The ratio of the first electric regenerative braking torque to the second electric regenerative braking torque is less than 3:2.

S520: When a first signal is obtained, determine a first hydraulic braking torque based on a first braking torque and the first electric regenerative braking torque, where the first braking torque is determined based on the preset distribution ratio and the second electric regenerative braking torque, and the first signal indicates to perform hydraulic braking torque compensation.

The first hydraulic braking torque may be a hydraulic braking torque determined by an ESC and output by a front axle hydraulic brake.

Optionally, the braking-required torque may be a braking-required torque output by an autonomous driving controller, or may be a braking-required torque determined based on a driving operation of a user.

Optionally, the determining the first hydraulic braking torque based on the first braking torque and the first electric regenerative braking torque includes: when a sum of the first braking torque and the second electric regenerative braking torque is greater than the braking-required torque, determining the first hydraulic braking torque based on the braking-required torque, the first electric regenerative braking torque, and the second electric regenerative braking torque.

For example, for the vehicle that performs regenerative braking through the rear axle, the preset distribution ratio is 3:2, the braking-required torque is 4000 Nm, the first electric regenerative braking torque may be 0, the second electric regenerative braking torque may be 1800 Nm, and a maximum electric regenerative braking torque of the rear axle is 1800 Nm. When an electric regenerative braking torque of the rear axle reaches the maximum electric regenerative braking torque of the rear axle, the ESC triggers hydraulic braking torque compensation. Because a ratio of an electric regenerative braking torque of the front axle to the electric regenerative braking torque of the rear axle is less than 3:2, the ESC may first determine the first braking torque (2700 Nm) based on the preset distribution ratio and the second electric regenerative braking torque of the rear axle. Because the sum (4500 Nm) of the first braking torque and the second electric regenerative braking torque is greater than the braking-required torque, the ESC may determine the first hydraulic braking torque based on the braking-required torque, the first electric regenerative braking torque, and the second electric regenerative braking torque. For example, the ESC may determine the first hydraulic braking torque as a difference between the braking-required torque and a sum of the first electric regenerative braking torque and the second electric regenerative braking torque, that is, the first hydraulic braking torque is 2200 Nm. In this way, a total braking torque of the front axle is 2200 Nm (the electric regenerative braking torque is 0, and the hydraulic braking torque is 2200 Nm), a total braking torque of the rear axle is 1800 Nm (the electric regenerative braking torque is 1800 Nm, and the hydraulic braking torque is 0), and a total braking torque of the front axle and the rear axle is equal to the braking-required torque.

Optionally, the determining the first hydraulic braking torque based on the first braking torque and the first electric regenerative braking torque includes: when a sum of the first braking torque and the second electric regenerative braking torque is equal to the braking-required torque, determining a difference between the first braking torque and the first electric regenerative braking torque as the first hydraulic braking torque.

For example, for the vehicle that performs regenerative braking through the rear axle, the preset distribution ratio is 3:2, the braking-required torque is 4500 Nm, the first electric regenerative braking torque may be 0, the second electric regenerative braking torque may be 1800 Nm, and a maximum electric regenerative braking torque of the rear axle is 1800 Nm. When an electric regenerative braking torque of the rear axle reaches the maximum electric regenerative braking torque of the rear axle, the ESC triggers hydraulic braking torque compensation. Because a ratio of an electric regenerative braking torque of the front axle to the electric regenerative braking torque of the rear axle is less than 3:2, the ESC may first determine the first braking torque (2700 Nm) based on the preset distribution ratio and the second electric regenerative braking torque of the rear axle. Because the sum (4500 Nm) of the first braking torque and the second electric regenerative braking torque is equal to the braking-required torque, the ESC may determine the difference between the first braking torque and the first electric regenerative braking torque as the first hydraulic braking torque. In this way, a total braking torque of the front axle is 2700 Nm (the electric regenerative braking torque is 0, and the hydraulic braking torque is 2700 Nm), a total braking torque of the rear axle is 1800 Nm (the electric regenerative braking torque is 1800 Nm, and the hydraulic braking torque is 0), and a total braking torque of the front axle and the rear axle is equal to the braking-required torque.

Optionally, the determining the first hydraulic braking torque based on the first braking torque and the first electric regenerative braking torque includes: when a sum of the first braking torque and the second electric regenerative braking torque is less than the braking-required torque, determining a second hydraulic braking torque based on the braking-required torque, the second electric regenerative braking torque, and the first braking torque; determining a third hydraulic braking torque and a fourth hydraulic braking torque based on the preset distribution ratio and the second hydraulic braking torque; and determining the first hydraulic braking torque based on the third hydraulic braking torque and a fifth hydraulic braking torque, where the fifth hydraulic braking torque is determined based on a difference between the first braking torque and the first electric regenerative braking torque; and the controlling, based on the first hydraulic braking torque, the hydraulic brake of the first axle to work includes: controlling the hydraulic brake of the first axle to output the first hydraulic braking torque, and controlling a hydraulic brake of the second axle to output the fourth hydraulic braking torque.

For example, for the vehicle that performs regenerative braking through the rear axle, the preset distribution ratio is 3:2, the braking-required torque is 5000 Nm, the first electric regenerative braking torque may be 0, the second electric regenerative braking torque may be 1800 Nm, and a maximum electric regenerative braking torque of the rear axle is 1800 Nm. When an electric regenerative braking torque of the rear axle reaches the maximum electric regenerative braking torque of the rear axle, the ESC triggers hydraulic braking torque compensation. Because a ratio of an electric regenerative braking torque of the front axle to the electric regenerative braking torque of the rear axle is less than 3:2, the ESC may first determine the first braking torque (2700 Nm) based on the preset distribution ratio and the second electric regenerative braking torque of the rear axle. Because the sum (4500 Nm) of the first braking torque and the second electric regenerative braking torque is less than the braking-required torque, the ESC may determine a difference between the braking-required torque and the sum of the first braking torque and the second electric regenerative braking torque as the second hydraulic braking torque (500 Nm). In this case, the ESC may determine, based on the preset distribution ratio and the second hydraulic braking torque, the third hydraulic braking torque (300 Nm) distributed to the front axle and the fourth hydraulic braking torque (200 Nm) distributed to the rear axle. The ESC may control a front axle hydraulic brake to output the first hydraulic braking torque (for example, a sum (3000 Nm) of the third hydraulic braking torque and the fifth hydraulic braking torque (2700 Nm)), and control a rear axle hydraulic brake to output the fourth hydraulic braking torque, where the fifth hydraulic braking torque is equal to a difference between the first braking torque and the first electric regenerative braking torque. In this way, a total braking torque of the front axle is 3000 Nm (the electric regenerative braking torque is 0, and the hydraulic braking torque is 3000 Nm), a total braking torque of the rear axle is 2000 Nm (the electric regenerative braking torque is 1800 Nm, and the hydraulic braking torque is 200 Nm), and a total braking torque of the vehicle may reach the braking-required torque.

Optionally, the method 500 further includes: obtaining a sixth hydraulic braking torque of the second axle when an EBD function is triggered; and controlling the hydraulic brake of the first axle to output a seventh hydraulic braking torque and stopping increasing a hydraulic braking torque output by the hydraulic brake of the second axle, where the seventh hydraulic braking torque is determined based on the third hydraulic braking torque, the fifth hydraulic braking torque, and a difference between the fourth hydraulic braking torque and the sixth hydraulic braking torque.

For example, for the vehicle that performs regenerative braking through the rear axle, the preset distribution ratio is 3:2, the braking-required torque is 6000 Nm, the first electric regenerative braking torque may be 0, the second electric regenerative braking torque may be 1800 Nm, and the maximum electric regenerative braking torque of the rear axle is 1800 Nm. When the electric regenerative braking torque of the rear axle reaches the maximum electric regenerative braking torque of the rear axle, the ESC triggers hydraulic braking torque compensation. Because the ratio of the electric regenerative braking torque of the front axle to the electric regenerative braking torque of the rear axle is less than 3:2, the ESC may first determine the first braking torque (2700 Nm) based on the preset distribution ratio and the second electric regenerative braking torque of the rear axle. Because the sum (4500 Nm) of the first braking torque and the second electric regenerative braking torque is less than the braking-required torque, the ESC may determine the difference between the braking-required torque and the sum of the first braking torque and the second electric regenerative braking torque as the second hydraulic braking torque (1500 Nm). The ESC may determine, based on the preset distribution ratio and the second hydraulic braking torque, the third hydraulic braking torque (900 Nm) distributed to the front axle and the fourth hydraulic braking torque (600 Nm) distributed to the rear axle. The ESC may control the front axle hydraulic brake to output a sum (3600 Nm) of the third hydraulic braking torque and the fifth hydraulic braking torque, and control the rear axle hydraulic brake to output the fourth hydraulic braking torque (600 Nm).

When the total braking torque of the rear axle reaches 2000 Nm, the EBD function is triggered, that is, when the hydraulic braking torque of the rear axle reaches the sixth hydraulic braking torque (200 Nm), the EBD function is triggered on the rear axle. After the EBD function is triggered, the total braking torque of the rear axle may not increase any further, causing under-shooting of 400 Nm in a braking torque of the vehicle. When determining that the EBD is triggered, the ESC may control the front axle hydraulic brake to output the seventh hydraulic braking torque (4000 Nm), where the seventh hydraulic braking torque may be a sum of the third hydraulic braking torque (900 Nm), the fifth hydraulic braking torque (2700 Nm), and the difference (400 Nm) between the fourth hydraulic braking torque and the sixth hydraulic braking torque. In this way, the total braking torque of the front axle is 4000 Nm (the electric regenerative braking torque is 0, and the hydraulic braking torque is 4000 Nm), the total braking torque of the rear axle is 2000 Nm (the electric regenerative braking torque is 1800 Nm, and the hydraulic braking torque is 200 Nm), and even if the EBD function is triggered on the vehicle, the total braking torque of the vehicle may reach the braking-required torque.

S530: Control, based on the first hydraulic braking torque, the hydraulic brake of the first axle to work.

Optionally, the first signal indicates that the vehicle reaches the maximum electric regenerative braking torque.

Optionally, the first electric regenerative braking torque is an actual regenerative torque of the first axle, and the second electric regenerative braking torque is an actual regenerative torque of the second axle.

Optionally, the method 500 includes: sending first electric regenerative braking request information to a VCU based on the braking-required torque, where the first electric regenerative braking request information includes information about a third electric regenerative braking torque; and when a difference between the third electric regenerative braking torque and an actual regenerative torque of the vehicle is greater than or equal to a first preset difference, sending second electric regenerative braking request information to the VCU based on the difference and the braking-required torque, where the second electric regenerative braking request information includes information about a fourth electric regenerative braking torque, and the actual regenerative torque of the vehicle is a sum of the actual regenerative torque of the first axle and the actual regenerative torque of the second axle.

For the foregoing process of sending the first electric regenerative braking request information and the second electric regenerative braking request information to the VCU, refer to the descriptions of the method 300. Details are not described herein again.

Optionally, the method 500 further includes: obtaining the first signal when a difference between the fourth electric regenerative braking torque and the maximum electric regenerative braking torque of the vehicle is less than or equal to a second preset difference, and a difference between the fourth electric regenerative braking torque and the actual regenerative torque of the vehicle is greater than or equal to the first preset difference.

Optionally, before obtaining the first signal, the method further includes: obtaining information that is about the maximum electric regenerative braking torque and that is sent by the VCU.

FIG. 6 is a schematic flowchart of a control method 600 according to an embodiment of this application. The method 600 may be performed by the vehicle 100, or may be performed by the computing platform 120, or may be performed by a processor, a circuit, or a chip in the computing platform 120, or may be performed by the ESC 210, or may be performed by the closed-loop pressure distribution module 211 in the ESC 210. The method 600 includes the following steps.

S610: Obtain a braking-required torque.

Optionally, the braking-required torque may be a braking-required torque output by an autonomous driving controller, or may be a braking-required torque determined based on a driving operation of a user.

S620: Control, based on the braking-required torque, a motor control unit to work based on a third electric regenerative braking torque.

Optionally, for example, the method 600 is performed by an ESC. The controlling, based on the braking-required torque, the motor control unit to work based on the third electric regenerative braking torque includes: The ESC sends first electric regenerative braking request information to a VCU, where the first electric regenerative braking request information includes information about the third electric regenerative braking torque.

S630: When a difference between the third electric regenerative braking torque and an actual regenerative torque of the vehicle is greater than or equal to a first preset difference, control, based on the difference and the braking-required torque, the motor control unit to work based on a fourth electric regenerative braking torque.

Optionally, for example, the method 600 is performed by an ESC. The method 600 further includes: The ESC obtains a first actual regenerative torque sent by a front axle motor control unit and a second actual regenerative torque sent by a rear axle motor control unit, where the actual regenerative torque of the vehicle is equal to a sum of the first actual regenerative torque and the second actual regenerative torque.

Optionally, for example, the method 600 is performed by an ESC. The controlling the motor control unit to work based on the fourth electric regenerative braking torque includes: The ESC sends second electric regenerative braking request information to the VCU, where the second electric regenerative braking request information includes information about the fourth electric regenerative braking torque.

Based on the foregoing technical solutions, an actual regenerative torque of a motor is considered during energy regeneration. When an absolute value of a deviation between a requested torque and an actual regenerative torque is greater than a control dead zone, the requested electric regenerative braking torque is dynamically adjusted. In this way, when the actual electric regenerative braking torque is insufficient, the requested electric regenerative braking torque is increased. This helps avoid a vehicle safety accident caused by an insufficient electric braking torque.

Optionally, the method 600 further includes: performing hydraulic braking torque compensation when a difference between the fourth electric regenerative braking torque and a maximum regenerative torque of the vehicle is less than or equal to a second preset difference, and a difference between the fourth electric regenerative braking torque and the actual regenerative torque of the vehicle is greater than or equal to the first preset difference.

Optionally, before performing hydraulic braking torque compensation, the method 600 further includes: obtaining information that is about the maximum regenerative torque and that is sent by the VCU.

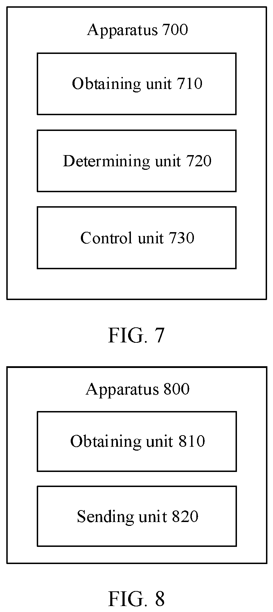

FIG. 7 is a block diagram of a control apparatus 700 according to an embodiment of this application. The apparatus 700 includes: an obtaining unit 710, configured to obtain a first electric regenerative braking torque of a first axle and a second electric regenerative braking torque of a second axle of a vehicle, where a ratio of the first electric regenerative braking torque to the second electric regenerative braking torque is less than a preset distribution ratio; a determining unit 720, configured to: when a first signal is obtained, determine a first hydraulic braking torque based on a first braking torque and the first electric regenerative braking torque, where the first braking torque is determined based on the preset distribution ratio and the second electric regenerative braking torque, and the first signal indicates to perform hydraulic braking torque compensation; and a control unit 730, configured to control, based on the first hydraulic braking torque, a hydraulic brake of the first axle to work.

Optionally, the determining unit 720 is configured to: when a sum of the first braking torque and the second electric regenerative braking torque is greater than a braking-required torque, determine the first hydraulic braking torque based on the braking-required torque, the first electric regenerative braking torque, and the second electric regenerative braking torque.

Optionally, the determining unit 720 is configured to: when a sum of the first braking torque and the second electric regenerative braking torque is less than a braking-required torque, determine a second hydraulic braking torque based on the braking-required torque, the second electric regenerative braking torque, and the first braking torque; determine a third hydraulic braking torque and a fourth hydraulic braking torque based on the preset distribution ratio and the second hydraulic braking torque; and determine the first hydraulic braking torque based on the third hydraulic braking torque and a fifth hydraulic braking torque, where the fifth hydraulic braking torque is determined based on a difference between the first braking torque and the first electric regenerative braking torque; and the control unit 730 is configured to: control the hydraulic brake of the first axle to output the first hydraulic braking torque, and control the hydraulic brake of the second axle to output the fourth hydraulic braking torque.

Optionally, the obtaining unit 710 is further configured to obtain a sixth hydraulic braking torque of the second axle when an electronic brake force distribution EBD function is triggered; and the control unit 730 is further configured to: control the hydraulic brake of the first axle to output a seventh hydraulic braking torque, and stop increasing a hydraulic braking torque output by the hydraulic brake of the second axle, where the seventh hydraulic braking torque is determined based on the third hydraulic braking torque, the fifth hydraulic braking torque, and a difference between the fourth hydraulic braking torque and the sixth hydraulic braking torque.

Optionally, the first signal indicates that the vehicle reaches a maximum electric regenerative braking torque.

Optionally, the first electric regenerative braking torque is an actual regenerative torque of the first axle, and the second electric regenerative braking torque is an actual regenerative torque of the second axle.

Optionally, the apparatus 700 further includes: a sending unit, configured to send first electric regenerative braking request information to a vehicle control unit VCU based on the braking-required torque, where the first electric regenerative braking request information includes information about a third electric regenerative braking torque, where the sending unit is further configured to: when a difference between the third electric regenerative braking torque and an actual regenerative torque of the vehicle is greater than or equal to a first preset difference, send second electric regenerative braking request information to the VCU based on the difference and the braking-required torque, where the second electric regenerative braking request information includes information about a fourth electric regenerative braking torque, and the actual regenerative torque of the vehicle is a sum of the actual regenerative torque of the first axle and the actual regenerative torque of the second axle.

Optionally, the obtaining unit 710 is configured to obtain the first signal when a difference between the fourth electric regenerative braking torque and the maximum electric regenerative braking torque of the vehicle is less than or equal to a second preset difference, and the difference between the fourth electric regenerative braking torque and the actual regenerative torque of the vehicle is greater than or equal to the first preset difference.

Optionally, the obtaining unit 710 is further configured to: before obtaining the first signal, obtain information that is about the maximum electric regenerative braking torque and that is sent by the VCU.

For example, the obtaining unit 710 may be the computing platform in FIG. 1, or a processing circuit, a processor, or a controller in the computing platform. For example, the obtaining unit 710 is the processor 121 in the computing platform. The processor 121 may obtain the first electric regenerative braking torque of a front axle and the second electric regenerative braking torque of a rear axle.

For another example, the determining unit 720 may be the computing platform in FIG. 1, or a processing circuit, a processor, or a controller in the computing platform. For example, the determining unit 720 is the processor 122 in the computing platform. When the ratio of the first electric regenerative braking torque to the second electric regenerative braking torque is less than the preset distribution ratio, the processor 122 may determine the first hydraulic braking torque of a front axle based on the first braking torque and the first electric regenerative braking torque.

For another example, the control unit 730 may be the computing platform in FIG. 1, or the processing circuit, the processor, or the controller in the computing platform. For example, the control unit 730 is the processor 123 in the computing platform. The processor 123 may control, based on the first hydraulic braking torque, a front axle hydraulic brake to work.

The function implemented by the obtaining unit 710, the function implemented by the determining unit 720, and the function implemented by the control unit 730 may be respectively implemented by different processors, or all functions may be implemented by a same processor, or some functions may be implemented by a same processor. This is not limited in embodiments of this application.

FIG. 8 is a block diagram of a control apparatus 800 according to an embodiment of this application. The control apparatus 800 includes: an obtaining unit 810, configured to obtain a braking-required torque; and a sending unit 820, configured to send first electric regenerative braking request information to a vehicle control unit VCU based on the braking-required torque, where the first electric regenerative braking request information includes information about a third electric regenerative braking torque, where the sending unit 820 is further configured to: when a difference between the third electric regenerative braking torque and an actual regenerative torque of a vehicle is greater than or equal to a first preset difference, send second electric regenerative braking request information to the VCU based on the difference and the braking-required torque, where the second electric regenerative braking request information includes information about a fourth electric regenerative braking torque.

Optionally, the apparatus 800 further includes a determining unit, configured to determine to perform hydraulic braking torque compensation when a difference between the fourth electric regenerative braking torque and a maximum regenerative torque of the vehicle is less than or equal to a second preset difference, and the difference between the fourth electric regenerative braking torque and the actual regenerative torque of the vehicle is greater than or equal to the first preset difference.

Optionally, the obtaining unit 810 is further configured to: before the determining unit determines to perform hydraulic braking torque compensation, obtain information that is about the maximum regenerative torque and that is sent by the VCU.

It should be understood that division of the units in the foregoing apparatus is merely logical function division. In practice, all or some of the units may be integrated into one physical entity, or may be physically separated. In addition, the units in the apparatus may be implemented in a form of software called by a processor. For example, the apparatus includes a processor, the processor is connected to a memory, the memory stores instructions, and the processor calls the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between components in the circuit. For another example, in another implementation, the hardware circuit may be implemented by using a PLD. An FPGA is used as an example, the FPGA may include a large quantity of logic gate circuits, and a connection relationship between the logic gate circuits is configured by using a configuration file, to implement the functions of some or all of the units. All the units of the apparatus may be implemented in a form of software called by the processor, or may be implemented in a form of hardware circuit, or some of the units are implemented in a form of software called by the processor, and remaining units are implemented in a form of hardware circuit.

The units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

Optionally, if the apparatus is located in the vehicle, the processing unit may be the processors 121 to 12n shown in FIG. 1.

An embodiment of this application further provides a brake controller. The brake controller may include the apparatus 700, or include the apparatus 800.

For example, the brake controller may be the ESC.

An embodiment of this application further provides a vehicle. The vehicle may include the apparatus 700, or include the apparatus 800, or include the brake controller.

An embodiment of this application further provides a computer program product. The computer program product includes computer program code, and when the computer program code is run on a computer, the computer is enabled to perform the foregoing method.

An embodiment of this application further provides a computer-readable medium. The computer-readable medium stores program code, and when the computer program code is run on a computer, the computer is enabled to perform the foregoing method.

In an implementation process, the steps in the foregoing methods may be implemented by using an integrated logical circuit of hardware in the processor, or by using instructions in a form of software. The method disclosed with reference to embodiments of this application may be directly performed by a hardware processor, or may be performed by a combination of a software module and hardware in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected as required to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, wherein the method comprises:
obtaining a first electric regenerative braking torque of a first axle and a second electric regenerative braking torque of a second axle of a vehicle, wherein a ratio of the first electric regenerative braking torque to the second electric regenerative braking torque is less than a preset distribution ratio;
when a first signal is obtained, determining a first hydraulic braking torque based on a first braking torque and the first electric regenerative braking torque, wherein the first braking torque is determined based on the preset distribution ratio and the second electric regenerative braking torque, and the first signal indicates to perform hydraulic braking torque compensation; and
controlling, based on the first hydraulic braking torque, a hydraulic brake of the first axle to work.

2. The method according to claim 1, wherein the determining the first hydraulic braking torque based on the first braking torque and the first electric regenerative braking torque comprises:
when a sum of the first braking torque and the second electric regenerative braking torque is greater than a braking-required torque, determining the first hydraulic braking torque based on the braking-required torque, the first electric regenerative braking torque, and the second electric regenerative braking torque.

3. The method according to claim 1, wherein the determining the first hydraulic braking torque based on the first braking torque and the first electric regenerative braking torque comprises:
when a sum of the first braking torque and the second electric regenerative braking torque is less than a braking-required torque, determining a second hydraulic braking torque based on the braking-required torque, the second electric regenerative braking torque, and the first braking torque;
determining a third hydraulic braking torque and a fourth hydraulic braking torque based on the preset distribution ratio and the second hydraulic braking torque; and
determining the first hydraulic braking torque based on the third hydraulic braking torque and a fifth hydraulic braking torque, wherein the fifth hydraulic braking torque is determined based on a difference between the first braking torque and the first electric regenerative braking torque; and
the controlling, based on the first hydraulic braking torque, the hydraulic brake of the first axle to work comprises:
controlling the hydraulic brake of the first axle to output the first hydraulic braking torque, and controlling a hydraulic brake of the second axle to output the fourth hydraulic braking torque.

4. The method according to claim 3, wherein the method further comprises:
obtaining a sixth hydraulic braking torque of the second axle when an electronic brake force distribution EBD function is triggered; and
controlling the hydraulic brake of the first axle to output a seventh hydraulic braking torque, and stopping increasing a hydraulic braking torque output by the hydraulic brake of the second axle, wherein the seventh hydraulic braking torque is determined based on the third hydraulic braking torque, the fifth hydraulic braking torque, and a difference between the fourth hydraulic braking torque and the sixth hydraulic braking torque.

5. The method according to any one of claims 1 to 4, wherein the first signal indicates that the vehicle reaches a maximum electric regenerative braking torque.

6. The method according to any one of claims 1 to 5, wherein the first electric regenerative braking torque is an actual regenerative torque of the first axle, and the second electric regenerative braking torque is an actual regenerative torque of the second axle.

7. The method according to claim 6, wherein the method comprises:
sending first electric regenerative braking request information to a vehicle control unit VCU based on the braking-required torque, wherein the first electric regenerative braking request information comprises information about a third electric regenerative braking torque; and
when a difference between the third electric regenerative braking torque and an actual regenerative torque of the vehicle is greater than or equal to a first preset difference, sending second electric regenerative braking request information to the VCU based on the difference and the braking-required torque, wherein the second electric regenerative braking request information comprises information about a fourth electric regenerative braking torque, and the actual regenerative torque of the vehicle is a sum of the actual regenerative torque of the first axle and the actual regenerative torque of the second axle.

8. The method according to claim 7, wherein the method further comprises:
obtaining the first signal when a difference between the fourth electric regenerative braking torque and the maximum electric regenerative braking torque of the vehicle is less than or equal to a second preset difference, and a difference between the fourth electric regenerative braking torque and the actual regenerative torque of the vehicle is greater than or equal to the first preset difference.

9. The method according to claim 8, wherein before obtaining the first signal, the method further comprises:
obtaining information that is about the maximum electric regenerative braking torque and that is sent by the VCU.

10. A control apparatus, comprising:
an obtaining unit, configured to obtain a first electric regenerative braking torque of a first axle and a second electric regenerative braking torque of a second axle of a vehicle, wherein a ratio of the first electric regenerative braking torque to the second electric regenerative braking torque is less than a preset distribution ratio;
a determining unit, configured to: when a first signal is obtained, determine a first hydraulic braking torque based on a first braking torque and the first electric regenerative braking torque, wherein the first braking torque is determined based on the preset distribution ratio and the second electric regenerative braking torque, and the first signal indicates to perform hydraulic braking torque compensation; and
a control unit, configured to control, based on the first hydraulic braking torque, a hydraulic brake of the first axle to work.

11. The apparatus according to claim 10, wherein the determining unit is configured to:
when a sum of the first braking torque and the second electric regenerative braking torque is greater than a braking-required torque, determine the first hydraulic braking torque based on the braking-required torque, the first electric regenerative braking torque, and the second electric regenerative braking torque.

12. The apparatus according to claim 10, wherein the determining unit is configured to:
when a sum of the first braking torque and the second electric regenerative braking torque is less than a braking-required torque, determine a second hydraulic braking torque based on the braking-required torque, the second electric regenerative braking torque, and the first braking torque;
determine a third hydraulic braking torque and a fourth hydraulic braking torque based on the preset distribution ratio and the second hydraulic braking torque; and
determine the first hydraulic braking torque based on the third hydraulic braking torque and a fifth hydraulic braking torque, wherein the fifth hydraulic braking torque is determined based on a difference between the first braking torque and the first electric regenerative braking torque; and
the control unit is configured to:
control the hydraulic brake of the first axle to output the first hydraulic braking torque, and control a hydraulic brake of the second axle to output the fourth hydraulic braking torque.

13. The apparatus according to claim 12, wherein
the obtaining unit is further configured to obtain a sixth hydraulic braking torque of the second axle when an electronic brake force distribution EBD function is triggered; and
the control unit is further configured to: control the hydraulic brake of the first axle to output a seventh hydraulic braking torque, and stop increasing a hydraulic braking torque output by the hydraulic brake of the second axle, wherein the seventh hydraulic braking torque is determined based on the third hydraulic braking torque, the fifth hydraulic braking torque, and a difference between the fourth hydraulic braking torque and the sixth hydraulic braking torque.

14. The apparatus according to any one of claims 10 to 13, wherein the first signal indicates that the vehicle reaches a maximum electric regenerative braking torque.

15. The apparatus according to any one of claims 10 to 14, wherein the first electric regenerative braking torque is an actual regenerative torque of the first axle, and the second electric regenerative braking torque is an actual regenerative torque of the second axle.

16. The apparatus according to claim 15, wherein the apparatus further comprises:
a sending unit, configured to send first electric regenerative braking request information to a vehicle control unit VCU based on the braking-required torque, wherein the first electric regenerative braking request information comprises information about a third electric regenerative braking torque, wherein
the sending unit is further configured to: when a difference between the third electric regenerative braking torque and an actual regenerative torque of the vehicle is greater than or equal to a first preset difference, send second electric regenerative braking request information to the VCU based on the difference and the braking-required torque, wherein the second electric regenerative braking request information comprises information about a fourth electric regenerative braking torque, and the actual regenerative torque of the vehicle is a sum of the actual regenerative torque of the first axle and the actual regenerative torque of the second axle.

17. The apparatus according to claim 16, wherein the obtaining unit is configured to:
obtain the first signal when a difference between the fourth electric regenerative braking torque and the maximum electric regenerative braking torque of the vehicle is less than or equal to a second preset difference, and a difference between the fourth electric regenerative braking torque and the actual regenerative torque of the vehicle is greater than or equal to the first preset difference.

18. The apparatus according to claim 17, wherein the obtaining unit is further configured to:
before obtaining the first signal, obtain information that is about the maximum electric regenerative braking torque and that is sent by the VCU.

19. A control apparatus, comprising:
a memory, configured to store a computer program; and
a processor, configured to execute the computer program stored in the memory, so that the apparatus performs the method according to any one of claims 1 to 9.

20. A brake controller, comprising the control apparatus according to any one of claims 10 to 19.

21. A vehicle, comprising the control apparatus according to any one of claims 10 to 19, or comprising the brake controller according to claim 20.

22. A computer-readable storage medium, wherein the computer-readable storage medium stores a computer program, and when the computer program is executed by a computer, the method according to any one of claims 1 to 9 is implemented.

23. A chip, comprising a circuit, wherein the circuit is configured to perform the method according to any one of claims 1 to 9.
